# EUROPEAN PATENT APPLICATION

(11) **EP 3 508 761 A1**
(43) Date of publication of application: **10.07.2019**
(21) Application number: 17846013.5
(22) Date of filing: 01.08.2017
(51) Int. Cl.: F16H 63/36

(54) **INTERLOCK MECHANISM**

(30) Priority: 31.08.2016 JP 2016169048
(71) Applicant: Aisin AI Co., Ltd., Nishio-shi, Aichi 445-0006 (JP)
(72) Inventor: ICHIKAWA, Masaya, Nishio-shi Aichi 445-0006 (JP); OSAWA, Hideya, Nishio-shi Aichi 445-0006 (JP); TANAKA, Hirotoshi, Nishio-shi Aichi 445-0006 (JP)
(74) Representative: TBK
(86) International application number: PCT/JP2017/027907
(87) International publication number: WO 2018/043004

(57) **Abstract**

In order to achieve a simple and miniaturized structure, there is provided an interlock mechanism (10a) including a shaft (1) disposed to be movable in an axial direction and rotatable in a rotation direction, an interlock member (4) disposed coaxially with an outer peripheral side of the shaft (1) so as to be rotatable integrally with the shaft (1) in the rotation direction and immovable in the axial direction, and configured to include a first main body portion (41), a second main body portion (42), and a connection pin (43), a first fork (F1) from which a fork head (F1d) protrudes, and a second fork (F2) from which a fork head (F2d) protrudes. A first engagement target portion (41c) engaging with the fork head (F1d) is cut out in the first main body portion (41) of the interlock member (4). A second engagement target portion (42b) engaging with the fork head (F2d) is cut out in the second main body portion (42) of the interlock member (4).

## Description

### Technical Field

The present invention relates to an interlock mechanism of a transmission.

### Background Art

In the related art, for example, as disclosed in PTL 1 below, an interlock structure is known which prevents movement of an unselected fork when a shift operation is performed by a driver. An interlock mechanism in the related art has a shift and select shaft pivoting in conjunction with a select operation, and an interlock rod disposed in parallel with the shift and select shaft and pivoting in conjunction with the pivoting of the shift and select shaft, an interlock arm fixed to the interlock rod and engaged with each fork or disengaged from each fork in accordance with an angular position of the interlock rod in a pivoting direction. In the interlock mechanism in the related art, a select arm fixed to the shift and select shaft is connected to a select bracket fixed to the interlock rod so that the interlock rod pivots in conjunction with the shift and select shaft.

### Citation List

### Patent Literature

PTL 1: JP-A-2009-168217

### Summary of Invention

### Technical Problem

Incidentally, the interlock mechanism in the related art has the interlock rod, the select arm, and the select bracket. Therefore, the interlock mechanism in the related art has a complicated and large structure, and assembly work is cumbersome, thereby increasing the cost of the interlock mechanism.

The present invention is made in order to solve the above-described problem, that is, an object of the present invention is to provide an interlock mechanism capable of achieving a simple and miniaturized structure.

### Solution to Problem

According to the invention related to claim 1, in order to solve the above-described problem, there is provided an interlock mechanism including a shift select shaft disposed to be movable along an axial direction and rotatable in a rotation direction, a first fork disposed to face the shift select shaft, a second fork disposed to face the shift select shaft, a first inner lever disposed in the shift select shaft, engaging with the first fork in a state where the shift select shaft is located at a first rotation position, and disengaging from the first fork in a state where the shift select shaft is located at a second rotation position different from the first rotation position, a second inner lever disposed in the shift select shaft, engaging with the second fork in a state where the shift select shaft is located at a third rotation position different from the first rotation position, and disengaging from the second fork in a state where the shift select shaft is located at a fourth rotation position different from the third rotation position, and an interlock member rotated integrally with the shift select shaft in the rotation direction, and disposed to be immovable in the axial direction. The first fork has a first engagement portion engaging with the first inner lever located at the first rotation position, and the second fork has a second engagement portion engaging with the second inner lever located at the third rotation position. The interlock member includes a first main body portion disposed coaxially with the shift select shaft on an outer peripheral side of the shift select shaft, a second main body portion different from the first main body portion, and a connection pin connecting the first main body portion and the second main body portion to each other so that the first main body portion and the second main body portion are integrally rotated in the rotation direction. The first main body portion has a first engagement target portion engaging with the first engagement portion in a state where the first main body portion is located at the third rotation position. The second main body portion has a second engagement target portion engaging with the second engagement portion in a state where the second main body portion is located at the first rotation position.

According to this configuration, the interlock member can be configured to include the first main body portion formed with the first engagement target portion, the second main body portion formed with the second engagement target portion, and the connection pin integrally rotating the first main body portion and the second main body portion in the rotation direction of the shift select shaft. Then, the interlock member configured in this way is coaxially disposed on the outer peripheral side of the shift select shaft. According to this simple configuration, it is possible to achieve the interlock mechanism in which the first engagement portion of the first fork and the second engagement portion of the second fork engage with or disengage from each other in accordance with the position in the rotation direction of the shift select shaft. In this manner, a structure of the interlock mechanism can be simplified, and the miniaturized interlock mechanism can be achieved. In addition to the simplified structure of the interlock mechanism, the interlock member is divided into the first main body portion and the second main body portion. Accordingly, the interlock mechanism can be easily assembled to the shift select shaft.

### Brief Description of Drawings

Fig. 1 is a view for describing a transmission.
Fig. 2 is a perspective view of a shift mechanism.
Fig. 3 is a perspective view for explaining a configuration of an interlock mechanism in Fig. 2.
Fig. 4 is a view for explaining a shift pattern.
Fig. 5 is a perspective view for explaining a second inner lever, a third inner lever, and an interlock member.
Fig. 6 is a perspective view for explaining a first main body portion in Fig. 5.
Fig. 7 is a perspective view for explaining a second main body portion in Fig. 5.
Fig. 8A is a view illustrating a positional relationship between a first fork and the interlock member when first-second gear shift is selected.
Fig. 8B is a view illustrating a positional relationship between the first fork and the interlock member when third-fourth gear shift is selected.
Fig. 8C is a view illustrating a positional relationship between the first fork and the interlock member when fifth-sixth gear shift is selected.
Fig. 8D is a view illustrating a positional relationship between the first fork and the interlock member when reverse shift is selected.
Fig. 9A is a view illustrating a positional relationship between a second fork and the interlock member when the first-second gear shift is selected.
Fig. 9B is a view illustrating a positional relationship between the second fork and the interlock member when the third-fourth gear shift is selected.
Fig. 9C is a view illustrating a positional relationship between the second fork and the interlock member when the fifth-sixth gear shift is selected.
Fig. 9D is a view illustrating a positional relationship between the second fork and the interlock member when the reverse shift is selected.
Fig. 10A is a view illustrating a positional relationship between a third fork and the interlock member when the first-second gear shift is selected.
Fig. 10B is a view illustrating a positional relationship between the third fork and the interlock member when the third-fourth gear shift is selected.
Fig. 10C is a view illustrating a positional relationship between the third fork and the interlock member when the fifth-sixth gear shift is selected.
Fig. 10D is a view illustrating a positional relationship between the third fork and the interlock member when the reverse shift is selected.
Fig. 11A is a view illustrating a positional relationship between a reverse fork and the interlock member when the first-second gear shift is selected.
Fig. 11B is a view illustrating a positional relationship between the reverse fork and the interlock member when the third-fourth gear shift is selected.
Fig. 11C is a view illustrating a positional relationship between the reverse fork and the interlock member when the fifth-sixth gear shift is selected.
Fig. 11D is a view illustrating a positional relationship between the reverse fork and the interlock member when the reverse shift is selected.
Fig. 12 is a perspective view for explaining an interlock member according to a modification example of an embodiment of the interlock mechanism in the present invention.
Fig. 13 is a partial sectional view for explaining an assembled state of the interlock member illustrated in Fig. 12.

### Description of Embodiments

### (Structure of Transmission)

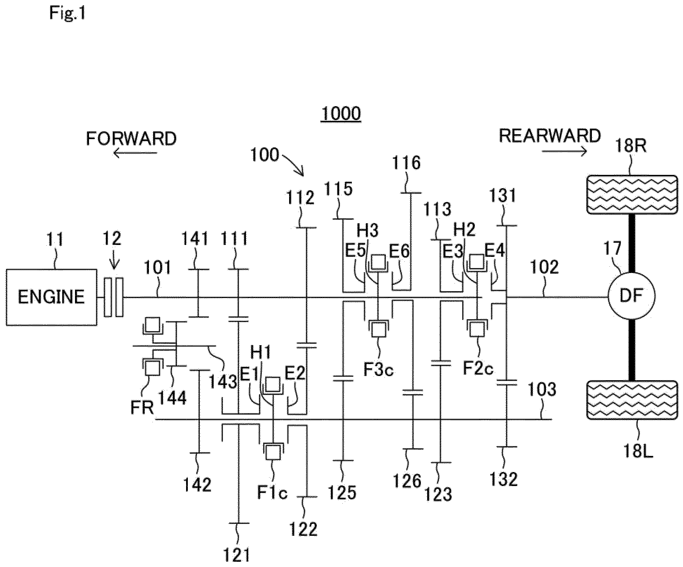

A transmission 100 according to the present embodiment will be described with reference to Fig. 1. In Fig. 1, an arrangement side of an engine 11 will be referred to as forward of the transmission 100, and an arrangement side of a differential (DF) 17 will be referred to as a rearward of the transmission 100. In addition, a forward-rearward direction of the transmission 100 will be referred to as an axial direction.

As illustrated in Fig. 1, the transmission 100 according to the present embodiment has an input shaft 101, an output shaft 102, a counter shaft 103, a first drive gear 111 to a sixth drive gear 116, a first driven gear 121 to a sixth driven gear 126, an output shaft side reduction gear 131, a counter shaft side reduction gear 132, a reverse drive gear 141, a reverse driven gear 142, an idler shaft 143, a reverse idler gear 144, a first hub H1 to a third hub H3, a first fork F1 to a third fork F3, and a reverse fork FR.

The input shaft 101, the output shaft 102, and the counter shaft 103 are rotatably disposed in a housing (not illustrated) of the transmission 100. The input shaft 101 is connected to a clutch 12, and a rotational torque from the engine 11 is input to the input shaft 101 via the clutch 12. The output shaft 102 is disposed behind the input shaft 101 so as to be coaxial with the input shaft 101. The differential (DF) 17 for absorbing a rotational speed difference between drive wheels 18R and 18L is connected to the output shaft 102. The counter shaft 103 is disposed in parallel with the input shaft 101 and the output shaft 102.

The first drive gear 111 and the second drive gear 112 are fixed to the input shaft 101. The fifth drive gear 115, the sixth drive gear 116, and the third drive gear 113 are disposed in the input shaft 101 so as to be idly rotatable. In the present embodiment, the first drive gear 111, the second drive gear 112, the fifth drive gear 115, the sixth drive gear 116, the third drive gear 113 are disposed in this order from the front to the rear of the input shaft 101.

The first driven gear 121 and the second driven gear 122 are disposed in the counter shaft 103 so as to be idly rotatable. The fifth driven gear 125, the sixth driven gear 126, and the third driven gear 123 are fixed to the counter shaft 103. In the present embodiment, the first driven gear 121, the second driven gear 122, the fifth driven gear 125, the sixth driven gear 126, and the third driven gear 123 are disposed in this order from the front to the rear of the counter shaft 103.

The first drive gear 111 and the first driven gear 121 mesh with each other. The second drive gear 112 and the second driven gear 122 mesh with each other. The third drive gear 113 and the third driven gear 123 mesh with each other. The fifth drive gear 115 and the fifth driven gear 125 mesh with each other. The sixth drive gear 116 and the sixth driven gear 126 mesh with each other.

A gear diameter increases in the order of the first drive gear 111, the second drive gear 112, the third drive gear 113, the fifth drive gear 115, and the sixth drive gear 116. A gear diameter decreases in the order of the first driven gear 121, the second driven gear 122, the third driven gear 123, the fifth driven gear 125, and the sixth driven gear 126. The gear diameter of the fifth drive gear 115 is larger than that of the fifth driven gear 125.

The output shaft side reduction gear 131 is disposed on the output shaft 102. The counter shaft side reduction gear 132 is disposed on the counter shaft 103. The output shaft side reduction gear 131 and the counter shaft side reduction gear 132 mesh with each other. The gear diameter of the counter shaft side reduction gear 132 is smaller than the gear diameter of the output shaft side reduction gear 131. Therefore, rotational speed of the engine 11 (more specifically, the input shaft 101) is reduced between the counter shaft side reduction gear 132 and the output shaft side reduction gear 131, and the rotational torque from the engine 11 increases.

The idler shaft 143 is rotatably disposed in the housing of the transmission 100 in parallel with the input shaft 101 and the counter shaft 103. The reverse drive gear 141 is fixed to the input shaft 101. The reverse driven gear 142 is fixed to the counter shaft 103. The reverse idler gear 144 is disposed in the idler shaft 143 so as to be movable in the axial direction (forward-rearward direction). The reverse idler gear 144 engages with the reverse fork FR. The reverse idler gear 144 meshes with the reverse drive gear 141 and the reverse driven gear 142, and does not mesh with the reverse drive gear 141 and the reverse driven gear 142.

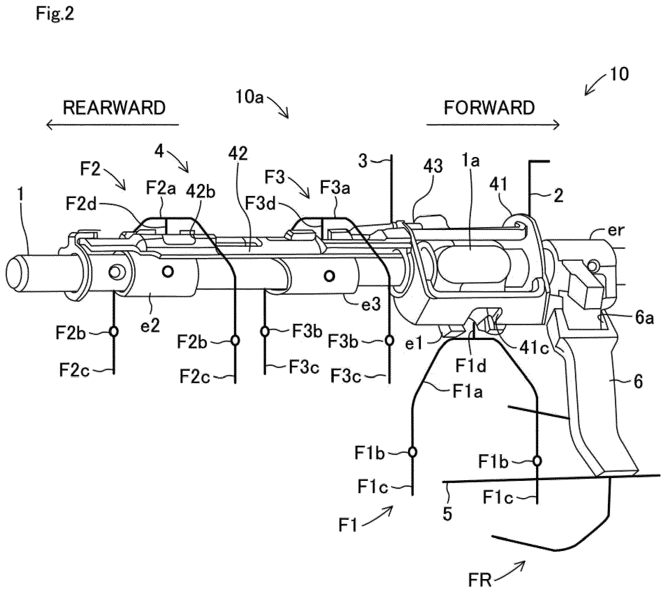

The first hub H1 is disposed between the first driven gear 121 and the second driven gear 122 so as not to be rotatable relative to the counter shaft 103 and so as to be movable in the axial direction. The first hub H1 engages with a connection portion F1c (refer to Fig. 2) of the first fork F1. In accordance with a position in the axial direction, the first hub H1 engages with or disengages from any one of a first engagement-disengagement portion E1 formed in the first driven gear 121 and a second engagement-disengagement portion E2 formed in the second driven gear 122.

The second hub H2 is disposed between the third drive gear 113 and the output shaft 102 so as not to be rotatable relative to the input shaft 101 and so as to be movable in the axial direction. The second hub H2 engages with a connection portion F2c (refer to Fig. 2) of the second fork F2. In accordance with a position in the axial direction, the second hub H2 engages with or disengages from any one of a third engagement-disengagement portion E3 formed in the third drive gear 113 and a fourth engagement-disengagement portion E4 formed in the output shaft 102.

The third hub H3 is disposed between the fifth drive gear 115 and the sixth drive gear 116 so as not to be rotatable relative to the input shaft 101 and so as to be movable in the axial direction. The third hub H3 engages with a connection portion F3c (refer to Fig. 2) of the third fork F3. In accordance with a position in the axial direction, the third hub H3 engages with or disengages from any one of a fifth engagement-disengagement portion E5 formed in the fifth drive gear 115 and a sixth engagement-disengagement portion E6 formed in the sixth drive gear 116.

A synchronizer mechanism for synchronizing the rotational speed difference between the respective hub H1 to hub H3 and the respective engagement-disengagement portion E1 to engagement-disengagement portion E6 is disposed between the respective hub H1 to hub H3 and the respective engagement-disengagement portion E1 to engagement-disengagement portion E6. The synchronizer mechanism is a well-known technology, and thus, description thereof will be omitted.

### (Shift Mechanism)

Hereinafter, a shift mechanism 10 will be described with reference to Figs. 2 to 11. The shift mechanism 10 forms a gear shifting stage of the transmission 100. As illustrated in Fig. 2, the shift mechanism 10 includes a shift select shaft 1, a shift outer lever 2, a select outer lever 3, an interlock member 4, a reverse fork shaft 5, and a reverse fork connection member 6. Furthermore, the shift mechanism 10 includes the first fork F1 to the third fork F3, the reverse fork FR, a first inner lever e1 to a third inner lever e3, and a reverse inner lever er.

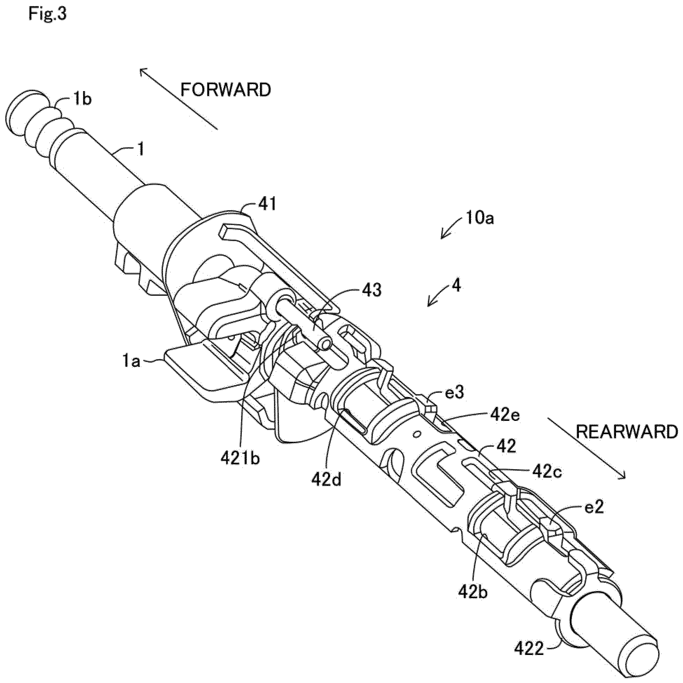

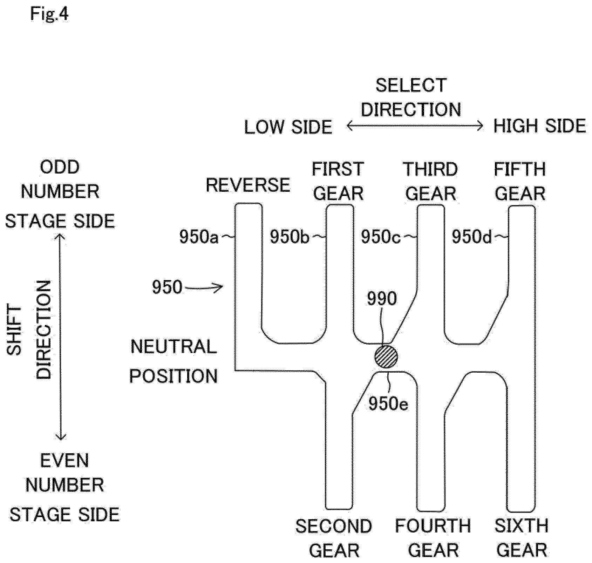

The shift select shaft 1 (hereinafter, simply referred to as a "shaft 1") is disposed in the housing of the transmission 100 so as to be movable along the axial direction and rotatable around an axis. As illustrated in Fig. 3, a tip portion on a front side of the shaft 1 has a groove portion 1b engaging with a lock ball member (not illustrated). As illustrated in Figs. 2 and 3, a shift select shaft head 1a is fixed to the front side of the shaft 1. As illustrated in Fig. 2, the shift outer lever 2 and the select outer lever 3 are connected to the shift select shaft head 1a via a well-known link mechanism. The shift outer lever 2 and the select outer lever 3 are respectively connected to a shift lever 990 (refer to Fig. 4) disposed in a driver's seat via a gear shift cable (not illustrated).

If the shift lever 990 is moved in a shift direction (refer to Fig. 4), an operation force input to the shift lever 990 is transmitted to the shift outer lever 2 via the gear shift cable, and the shift outer lever 2 pivots. In this way, the shift outer lever 2 pivots and the operation force input to the shift lever 990 is transmitted to the shaft 1, thereby moving the shaft 1 in the axial direction.

If the shift lever 990 is moved in the select direction (refer to Fig. 4), the operation force input to the shift lever 990 is transmitted to the select outer lever 3 via the gear shift cable, and the select outer lever 3 pivots. In this way, the select outer lever 3 pivots and the operation force input to the shift lever 990 is transmitted to the shaft 1, thereby rotating the shaft 1 around the axis.

Here, referring to Fig. 4, a shift pattern 950 which indicates a movable range of the shift lever 990 will be described. In the shift pattern 950, a reverse shift gate 950a, a first-second gear shift gate 950b, a third-fourth gear shift gate 950c, and a fifth-sixth gear shift gate 950d are arranged in parallel with each other, and neutral positions thereof communicate with each other via a select gate 950e. The reverse shift gate 950a, the first-second gear shift gate 950b, the third-fourth gear shift gate 950c, and the fifth-sixth gear shift gate 950d are formed in the shift direction which is the forward-rearward direction. In addition, the neutral position of the first-second gear shift gate 950b, the third-fourth gear shift gate 950c, and the fifth-sixth gear shift gate 950d is an intermediate position of the shift direction. In addition, the neutral position of the reverse shift gate 950a is located at a terminal of the reverse shift gate 950a, and is a lower end of the reverse shift gate 950a in the present embodiment. In addition, the select gate 950e is formed in the select direction which is a rightward-leftward direction.

Referring back to Fig. 2, the forks are disposed facing each other across the shaft 1 in the order of the first fork F1, the third fork F3, and the second fork F2 from the front to the rear. The first fork F1 to the third fork F3 are gate-type swing forks, and respectively include a main body portion F1a to a main body portion F3a, a support portion F1b to a support portion F3b, a connection portion F1c to a connection portion F3c. The main body portion F1a, the main body portion F2a, and the main body portion F3a have substantially a C-shape. As illustrated in Fig. 2, a fork head F1d serving as a first engagement portion integrally protrudes on an upper surface side of the main body portion F1a of the first fork F1. In addition, as illustrated in Fig. 2, a fork head F2d and a fork head F3d respectively serving as a second engagement portion protrude on a lower surface side of the main body portion F2a of the second fork F2 and the main body portion F3a of the third fork F3, that is, on a surface facing the shaft 1.

The support portion F1b, the support portion F2b, and the support portion F3b are disposed on both side portions of each of the main body portion F1a to the main body portion F3a. A pair of the support portions F1b to the support portions F3b is fixed to the housing of the transmission 100. In this manner, the first fork F1 to the third fork F3 are attached to the housing so as to be swingable.

As illustrated in Fig. 2, the reverse fork shaft 5 is attached to the housing of the transmission 100 while a longitudinal direction of the reverse fork shaft 5 is set as the axial direction. The reverse fork FR is attached to the reverse fork shaft 5 so as to be movable in the axial direction. The reverse fork connection member 6 connects the reverse fork FR and the reverse fork shaft 5 to each other. A reverse engagement portion 6a is disposed in the reverse fork connection member 6.

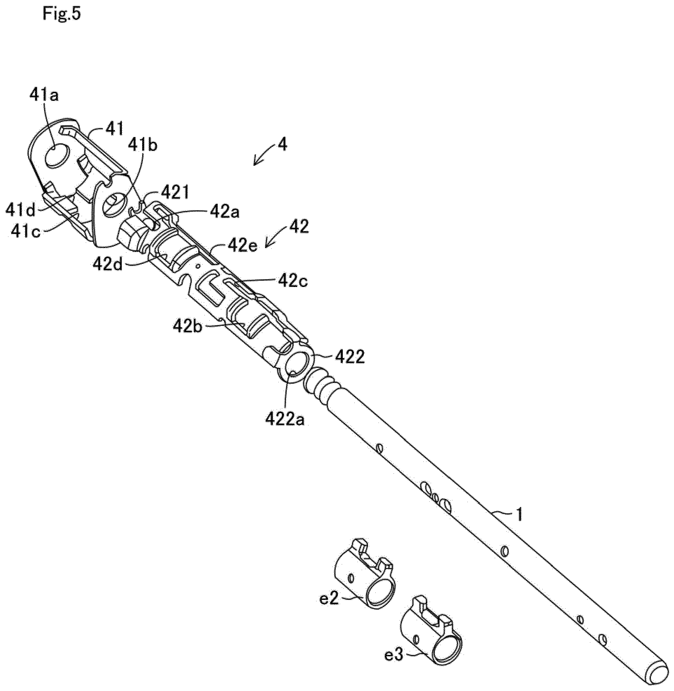

As illustrated in Fig. 2, the first inner lever e1 is formed integrally with the shift select shaft head 1a, and is fixed to the shaft 1 together with the shift select shaft head 1a. As illustrated in Figs. 2 and 5, the second inner lever e2, the third inner lever e3, and the reverse inner lever er are fixed to the shaft 1 by using pins, for example. As illustrated in Fig. 2, the first inner lever e1 engages with the fork head F1d of the first fork F1 or disengages from the fork head F1d. The second inner lever e2 engages with the fork head F2d of the second fork F2 or disengages from the fork head F2d. The third inner lever e3 engages with the fork head F3d of the third fork F3 or disengages from the fork head F3d. The reverse inner lever er engages with the reverse engagement portion 6a of the reverse fork connection member 6 or disengages from the reverse engagement portion 6a.

Depending on an angle of the shaft 1 in the rotation direction, any one of the first inner lever e1 to the third inner lever e3 and the reverse inner lever er selectively engages with any one of the fork head F1d, the fork head F2d, the fork head F3d, and the reverse engagement portion 6a which are located at positions corresponding to the inner levers.

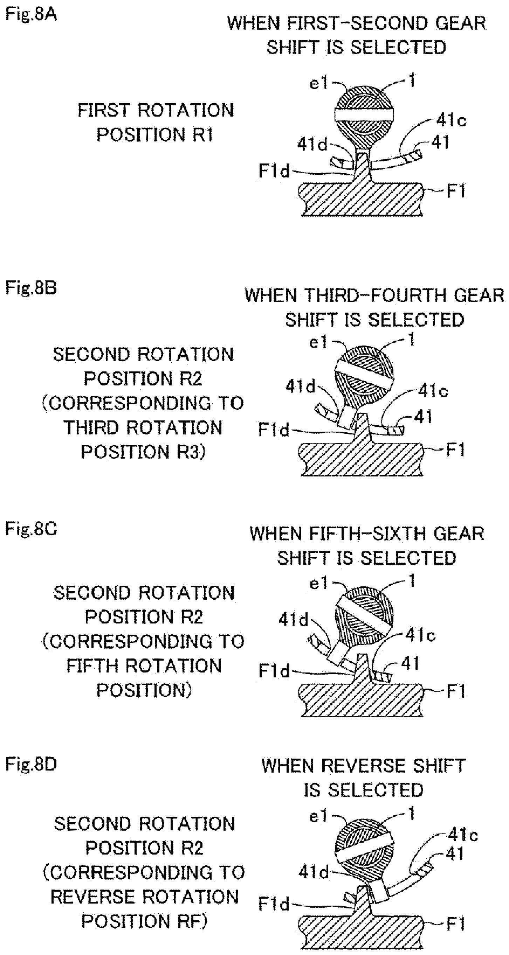

Specifically, in a case where the shift lever 990 is located in the first-second gear shift gate 950b, the shaft 1 is located at a first rotation position R1. As illustrated in Fig. 8A, the first inner lever e1 engages with the fork head F1d (first fork F1). On the other hand, as illustrated in Figs. 8B to 8D, in a case where the shaft 1 is located at a second rotation position R2 different from the first rotation position R1, the first inner lever e1 disengages from the fork head F1d (first fork F1).

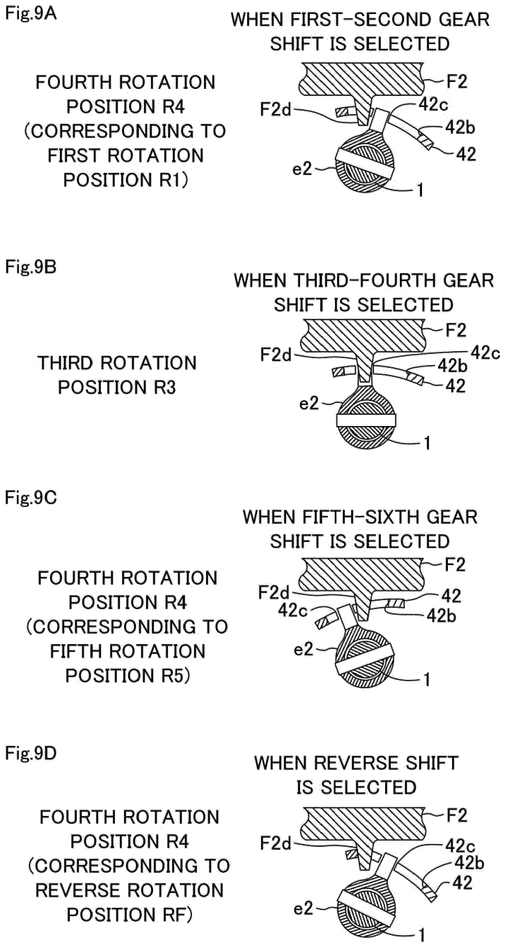

In a case where the shift lever 990 is located in the third-fourth gear shift gate 950c, the shaft 1 is located at a third rotation position R3 different from the first rotation position R1, which is a position further rotated toward a forward rotation side from the first rotation position R1. As illustrated in Fig. 9B, the second inner lever e2 engages with the fork head F2d (second fork F2). On the other hand, as illustrated in Figs. 9A, 9C, and 9D, in a case where the shaft 1 is located at a fourth rotation position R4 different from the third rotation position R3, the second inner lever e2 disengages from the fork head F2d (second fork F2).

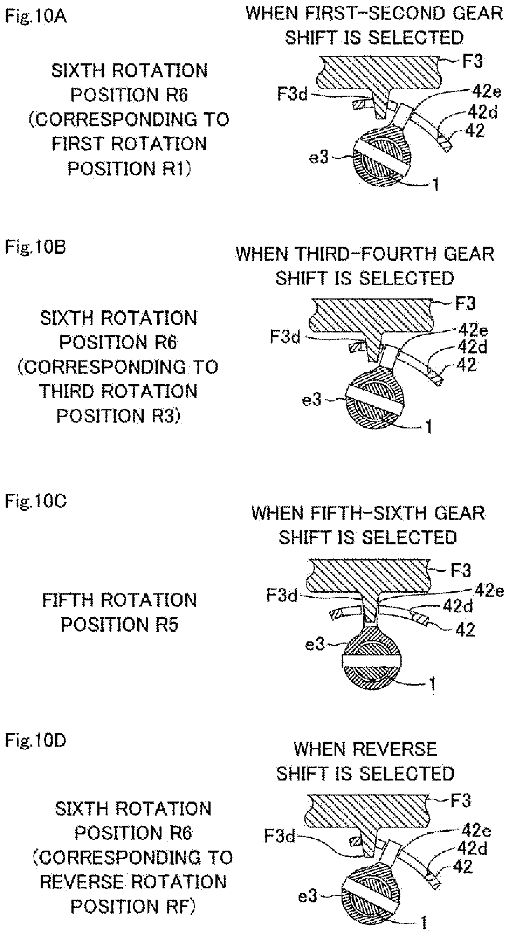

In a case where the shift lever 990 is located in the fifth-sixth gear shift gate 950d, the shaft 1 is located at a fifth rotation position R5 different from the first rotation position R1 and the third rotation position R3, which is a position further rotated toward the forward rotation side from the third rotation position R3. As illustrated in Fig. 10C, the third inner lever e3 engages with the fork head F3d (third fork F3). On the other hand, as illustrated in Figs. 10A, 10B, and 10D, in a case where the shaft 1 is located at a sixth rotation position R6 different from the fifth rotation position R5, the third inner lever e3 disengages from the fork head F3d (third fork F3).

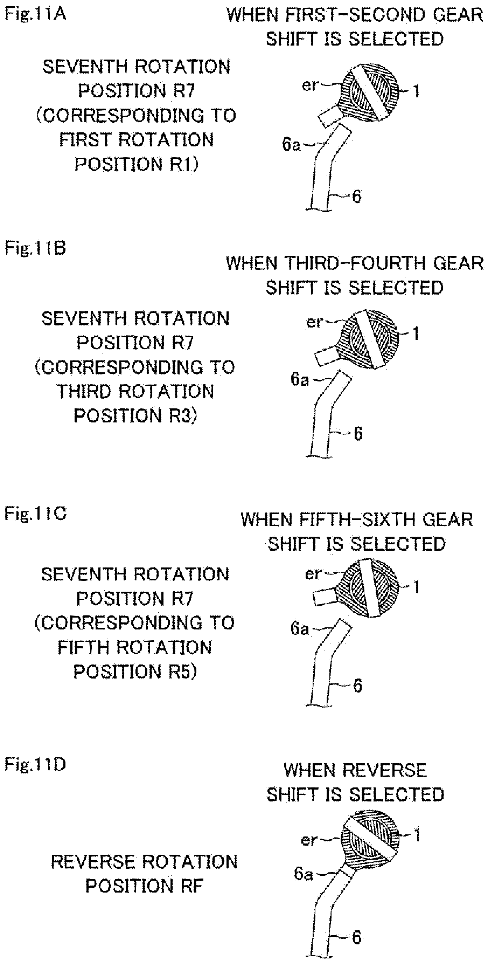

In a case where the shift lever 990 is located in the reverse shift gate 950a and the shaft 1 is located at a reverse rotation position RF which is a position rotated to a reverse rotation side from the first rotation position R1, as illustrated in Fig. 11D, the reverse inner lever er engages with the reverse engagement portion 6a (reverse fork FR). On the other hand, as illustrated in Figs. 11A, 11B, and 11C, in a case where the shaft 1 is located at a seventh rotation position R7 different from the reverse rotation position RF, the reverse inner lever er disengages from the reverse engagement portion 6a (reverse fork FR).

The second rotation position R2 includes the third rotation position R3 to the seventh rotation position R7 and the reverse rotation position RF. The fourth rotation position R4 includes the first rotation position R1 to the third rotation position R3, the fifth rotation position R5 to the seventh rotation position R7, and the reverse rotation position RF. The sixth rotation position R6 includes the first rotation position R1 to the fifth rotation position R5, the seventh rotation position R7, and the reverse rotation position RF. The seventh rotation position R7 includes the first rotation position R1 to the sixth rotation position R6 and the reverse rotation position RF.

In a state where any one of the first inner lever e1 to the third inner lever e3 engages with any one of the fork head F1d to the fork head F3d located at positions corresponding to the inner levers, if the shift lever 990 is moved to an odd number stage side in the shift direction, the shaft 1 moves rearward. If the shaft 1 moves rearward, the first fork F1 to the third fork F3 engaging with any one of the first inner lever e1 to the third inner lever e3 swings. The connection portion F1c to the connection portion F3c of the swung first fork F1 to third fork F3 move forward. Then, the hub H1 to the hub H3 engaging with the moved connection portion F1c to connection portion F3c move forward. In this manner, a gear shifting stage corresponding to the moved hub H1 and hub H3 is formed. That is, any one of the first gear, the third gear, and the fifth gear is formed in the transmission 100.

In a state where any one of the first inner lever e1 to the third inner lever e3 engages with any one of the fork head F1d to the fork head F3d located at positions corresponding to the inner levers, if the shift lever 990 is moved to an even number stage side in the shift direction, the shaft 1 moves forward. If the shaft 1 moves forward, the first fork F1 to the third fork F3 engaging with any one of the first inner lever e1 to the third inner lever e3 swings. The connection portion F1c to the connection portion F3c of the swung first fork F1 to third fork F3 move rearward. Then, the hub H1 to the hub H3 engaging with the moved connection portion F1c to connection portion F3c move rearward. In this manner, a gear shifting stage corresponding to the moved hub H1 and hub H3 is formed. That is, any one of the second gear, the fourth gear, and the sixth gear is formed in the transmission 100.

In addition, in a state where the reverse inner lever er engages with the reverse engagement portion 6a, if the shift lever 990 is moved to the odd number stage side in the shift direction, the shaft 1 moves rearward. If the shaft 1 moves rearward, the reverse fork FR moves rearward together with the reverse fork shaft 5 connected to the reverse fork connection member 6, and the reverse gear is formed in the transmission 100.

### (Interlock Mechanism)

Hereinafter, an interlock mechanism 10a will be described with reference to Figs. 2 to 7. In a case where the shaft 1 and any one fork of the first fork F1 to the third fork F3 are connected and selected, the interlock mechanism 10a prevents the swinging of the first fork F1 to the third fork F3 except for the selected fork. The interlock mechanism 10a is configured to include the interlock member 4, the first fork F1 to the third fork F3, and the reverse fork connection member 6.

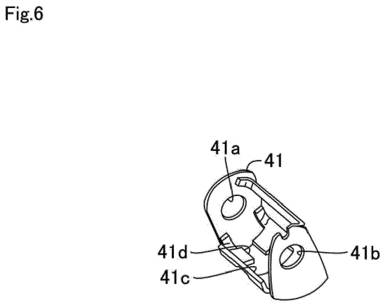

As illustrated in Fig. 3, the interlock member 4 has a first main body portion 41 and a second main body portion 42 which are arranged rearward from the front, and a connection pin 43 connecting the first main body portion 41 and the second main body portion 42 to each other. The first main body portion 41 has substantially a cylindrical shape, and is located to surround the shift select shaft head 1a of the shaft 1. As illustrated in detail in Figs. 5 and 6, the first main body portion 41 has a pair of two communication hole 41a and communication hole 41b communicating with each other in the forward-rearward direction. The shaft 1 is inserted into the communication holes 41a and 41b of the first main body portion 41. In this manner, the first main body portion 41 is disposed coaxially with the shaft 1 on the outer peripheral side of the shaft 1.

The first main body portion 41 is disposed in the shaft 1 while accommodating the shift select shaft head 1a (more specifically, the first inner lever e1). In this manner, the first main body portion 41 is rotated integrally with the shaft 1. On the other hand, the shaft 1 is movable relative to the first main body portion 41 in the forward-rearward direction. The first main body portion 41 is restricted in moving in the forward-rearward direction (axial direction) by the housing of the transmission 100, and is immovable in the axial direction.

As illustrated in Figs. 5 and 6, a first engagement target portion 41c extending in a direction orthogonal to the axial direction of the shaft 1 is formed by cutting out the first main body portion 41. The first main body portion 41 has a slit 41d in the forward-rearward direction (axial direction of the shaft 1) so as to traverse the first engagement target portion 41c. Depending on a position in the rotation direction of the first main body portion 41 (that is, the interlock member 4), the first engagement target portion 41c engages with the fork head F1d, or disengages from the fork head F1d. The slit 41d accommodates the first inner lever e1. Whereas the slit 41d allows the first inner lever e1 to move in the axial direction relative to the first main body portion 41 (that is, the interlock member 4), the slit 41d restricts the first inner lever e1 in moving in the rotation direction relative to the first main body portion 41 (that is, the interlock member 4).

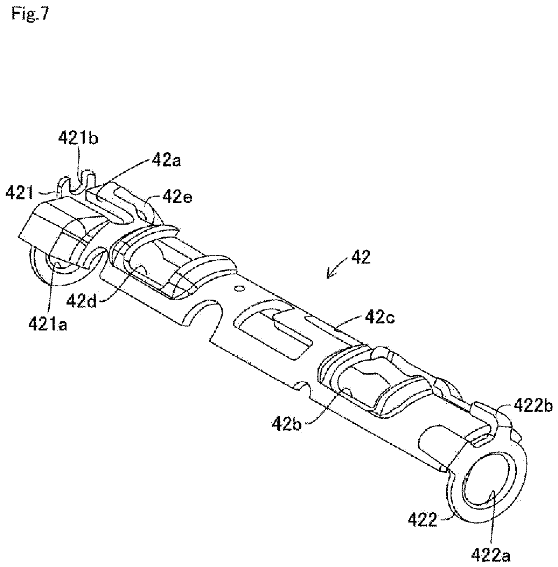

As illustrated in detail in Figs. 5 and 7, the second main body portion 42 has a semi-cylindrical shape. A first plate portion 421 is connected to the front side (one end side) adjacent to the first main body portion 41, and a second plate portion 422 is connected to the rear side (the other end side) of the second main body portion 42. The first plate portion 421 and the second plate portion 422 are integrally connected to the second main body portion 42 by means of welding, for example.

As illustrated in Fig. 7, the first plate portion 421 is formed in a substantially annular shape, and has a communication hole 421a communicating in the forward-rearward direction. In addition, the first plate portion 421 has a pin engagement portion 421b engaging with the connection pin 43. As illustrated in Fig. 7, the second plate portion 422 is formed in a substantially annular shape, and has a communication hole 422a communicating in the forward-rearward direction. In addition, the second plate portion 422 has a welding portion 422b to be welded to the second main body portion 42. The welding portion 422b is welded in a state of being folded back and brought into contact with the second main body portion 42. The shaft 1 is inserted into the communication hole 421a of the first plate portion 421 forming the second main body portion 42 and the communication hole 422a of the second plate portion 422. In this manner, the second main body portion 42 is disposed coaxially with the shaft 1 on the outer peripheral side of the shaft 1.

In addition, the second main body portion 42 has a recess portion 42a for accommodating the connection pin 43. As illustrated in Fig. 3, the proximal end side of the connection pin 43 is fixed to the shift select shaft head 1a so as not to be detachable therefrom. As illustrated in Fig. 3, the connection pin 43 engages with the pin engagement portion 421b of the first plate portion 421 and the recess portion 42a of the second main body portion 42. In this manner, the second main body portion 42 is rotated integrally with the first main body portion 41, that is, the shaft 1. On the other hand, the shaft 1 is movable in the forward-rearward direction relative to the second main body portion 42. The second main body portion 42 is restricted in moving in the forward-rearward direction (axial direction) by the housing of the transmission 100, and is immovable in the axial direction.

As illustrated in detail in Figs. 5 and 7, a second engagement target portion 42b extending in a direction orthogonal to the axial direction of the shaft 1 is formed by cutting out the rear side of the second main body portion 42. The second main body portion 42 has a slit 42c in the forward-rearward direction (axial direction of the shaft 1) so as to traverse the second engagement target portion 42b. Depending on a position in the rotation direction of the second main body portion 42 (that is, the interlock member 4), the second engagement target portion 42b engages with the fork head F2d, or disengages from the fork head F2d. The slit 42c accommodates the second inner lever e2. Whereas the slit 42c allows the second inner lever e2 to move in the axial direction relative to the second main body portion 42 (that is, the interlock member 4), the slit 42c restricts the second inner lever e2 in moving in the rotation direction relative to the second main body portion 42 (that is, the interlock member 4).

As illustrated in detail in Figs. 5 and 7, a third engagement target portion 42d extending in the direction orthogonal to the axial direction of the shaft 1 is formed by cutting out the front side of the second main body portion 42. The second main body portion 42 has a slit 42e in the forward-rearward direction (axial direction of the shaft 1) so as to traverse the third engagement target portion 42d. Depending on a position in the rotation direction of the second main body portion 42 (that is, the interlock member 4), the third engagement target portion 42d engages with the fork head F3d, or disengages from the fork head F3d. The slit 42e accommodates the third inner lever e3. Whereas the slit 42e allows the third inner lever e3 to move in the axial direction relative to the second main body portion 42 (that is, the interlock member 4), the slit 42e restricts the third inner lever e3 in moving in the rotation direction relative to the second main body portion 42 (that is, the interlock member 4).

### (Operation of Interlock Member)

Hereinafter, an operation of the interlock member 4 will be described with reference to Figs. 8 to 11. In a state where the shift lever 990 is located in the first-second gear shift gate 950b and the shaft 1 is located at the first rotation position R1, as illustrated in Fig. 8A, the fork head F1d engages with the first inner lever e1. Then, the fork head F1d and the first inner lever e1 are located inside the first engagement target portion 41c at a position where the slit 41d of the first main body portion 41 is formed. Therefore, the first fork F1 is movable (swingable) in the axial direction. If the shift lever 990 is moved to the odd number stage side or the even number stage side in the shift direction and the shaft 1 is moved in the axial direction, the first fork F1 swings in the axial direction, and the first gear or the second gear is formed in the transmission 100.

In a state where the shift lever 990 is located in the first-second gear shift gate 950b and the shaft 1 is located at the first rotation position R1, as illustrated in Fig. 9A, the fork head F2d of the second fork F2 does not engage with the second inner lever e2. Then, the fork head F2d engages with the second engagement target portion 42b of the second main body portion 42. Therefore, the second fork F2 is prevented from moving (swinging) in the axial direction. Accordingly, the third gear or the fourth gear is not formed in the transmission 100.

In a state where the shift lever 990 is located in the first-second gear shift gate 950b and the shaft 1 is located at the first rotation position R1, as illustrated in Fig. 10A, the fork head F3d of the third fork F3 does not engage with the third inner lever e3. Then, the fork head F3d engages with the third engagement target portion 42d of the second main body portion 42. Therefore, the third fork F3 is prevented from moving (swinging) in the axial direction. Accordingly, the fifth gear or the sixth gear is not formed in the transmission 100.

In a state where the shift lever 990 is located in the first-second gear shift gate 950b and the shaft 1 is located at the first rotation position R1, as illustrated in Fig. 11A, the reverse engagement portion 6a of the reverse fork connection member 6 does not engage with the reverse inner lever er. Therefore, the reverse fork FR is prevented from moving in the axial direction. Accordingly, the reverse gear is not formed in the transmission 100.

In a state where the shift lever 990 is located in the third-fourth gear shift gate 950c and the shaft 1 is located at the third rotation position R3, as illustrated in Fig. 8B, the fork head F1d of the first fork F1 does not engage with the first inner lever e1. Then, the fork head F1d is located inside the first engagement target portion 41c on the further rear side than the position where the slit 41d of the first main body portion 41 is formed. Therefore, the first fork F1 is prevented from moving (swinging) in the axial direction. Accordingly, the first gear or the second gear is not formed in the transmission 100.

In a state where the shift lever 990 is located in the third-fourth gear shift gate 950c and the shaft 1 is located at the third rotation position R3, as illustrated in Fig. 9B, the fork head F2d of the second fork F2 engages with the second inner lever e2. Then, the fork head F2d and the second inner lever e2 are located inside the second engagement target portion 42b at the position where the slit 42c of the second main body portion 42 is formed. Therefore, the second fork F2 is movable (swingable) in the axial direction. The shift lever 990 is moved to the odd number stage side or the even number stage side in the shift direction. If the shaft 1 is moved in the axial direction, the second fork F2 swings in the axial direction. Accordingly, the third gear or the fourth gear is formed in the transmission 100.

In a state where the shift lever 990 is located in the third-fourth gear shift gate 950c and the shaft 1 is located at the third rotation position R3, as illustrated in Fig. 10B, the fork head F3d of the third fork F3 does not engage with the third inner lever e3. Then, the fork head F3d is located inside the third engagement target portion 42d on the further rear side than the position where the slit 42e of the second main body portion 42 is formed. Therefore, the third fork F3 is prevented from moving (swinging) in the axial direction. Accordingly, the fifth gear or the sixth gear is not formed in the transmission 100.

In a state where the shift lever 990 is located in the third-fourth gear shift gate 950c and the shaft 1 is located at the third rotation position R3, as illustrated in Fig. 11B, the reverse engagement portion 6a of the reverse fork connection member 6 does not engage with the reverse inner lever er. Therefore, the reverse fork FR is prevented from moving in the axial direction. Accordingly, the reverse gear is not formed in the transmission 100.

In a state where the shift lever 990 is located in the fifth-sixth gear shift gate 950d and the shaft 1 is located at the fifth rotation position R5, as illustrated in Fig. 8C, the fork head F1d of the first fork F1 does not engage with the first inner lever e1. Then, the fork head F1d is located inside the first engagement target portion 41c on the further rear side than the position where the slit 41d of the first main body portion 41 is formed. Therefore, the first fork F1 is prevented from moving (swinging) in the axial direction. Accordingly, the first gear or the second gear is not formed in the transmission 100.

In a state where the shift lever 990 is located in the fifth-sixth gear shift gate 950d and the shaft 1 is located at the fifth rotation position R5, as illustrated in Fig. 9C, the fork head F2d of the second fork F2 does not engage with the second inner lever e2. Then, the fork head F2d is located inside the second engagement target portion 42b on the further rear side than the position where the slit 42c of the second main body portion 42 is formed. Therefore, the second fork F2 is prevented from moving (swinging) in the axial direction. Accordingly, the third gear or the fourth gear is not formed in the transmission 100.

In a state where the shift lever 990 is located in the fifth-sixth gear shift gate 950d and the shaft 1 is located at the fifth rotation position R5, as illustrated in Fig. 10C, the fork head F3d of the third fork F3 engages with the third inner lever e3. Then, the fork head F3d and the third inner lever e3 are located inside the third engagement target portion 42d at the position where the slit 42e of the second main body portion 42 is formed. Therefore, the third fork F3 is movable (swingable) in the axial direction. The shift lever 990 is moved to the odd number stage side or the even number stage side in the shift direction. If the shaft 1 is moved in the axial direction, the third fork F3 swings in the axial direction. Accordingly, the fifth gear or the sixth gear is formed in the transmission 100.

In a state where the shift lever 990 is located in the fifth-sixth gear shift gate 950d and the shaft 1 is located at the fifth rotation position R5, as illustrated in Fig. 11C, the reverse engagement portion 6a of the reverse fork connection member 6 does not engage with the reverse inner lever er. Therefore, the reverse fork FR is prevented from moving in the axial direction. Accordingly, the reverse gear is not formed in the transmission 100.

In a state where the shift lever 990 is located in the reverse shift gate 950a and the shaft 1 is located at the reverse rotation position RF, as illustrated in Fig. 8D, the fork head F1d of the first fork F1 is located inside the first engagement target portion 41c on the further front side than the position where the slit 41d of the first main body portion 41 is formed. Therefore, the first fork F1 is prevented from moving (swinging) in the axial direction. Accordingly, the first gear or the second gear is not formed in the transmission 100.

In a state where the shift lever 990 is located in the reverse shift gate 950a and the shaft 1 is located at the reverse rotation position RF, as illustrated in Fig. 9D, the fork head F2d of the second fork F2 does not engage with the second inner lever e2. Then, the fork head F2d is located inside the second engagement target portion 42b on the further front side than the position where the slit 42c of the second main body portion 42 is formed. Therefore, the second fork F2 is prevented from moving (swinging) in the axial direction. Accordingly, the third gear or the fourth gear is not formed in the transmission 100.

In a state where the shift lever 990 is located in the reverse shift gate 950a and the shaft 1 is located at the reverse rotation position RF, as illustrated in Fig. 10D, the fork head F3d of the third fork F3 does not engage with the third inner lever e3. Then, the fork head F3d is located inside the third engagement target portion 42d on the further front side than the position where the slit 42e of the second main body portion 42 is formed. Therefore, the third fork F3 is prevented from moving (swinging) in the axial direction. Accordingly, the fifth gear or the sixth gear is not formed in the transmission 100.

In a state where the shift lever 990 is located in the reverse shift gate 950a and the shaft 1 is located at the reverse rotation position RF, as illustrated in Fig. 11D, the reverse engagement portion 6a of the reverse fork connection member 6 engages with the reverse inner lever er. Therefore, the reverse fork FR is movable in the axial direction, and the shift lever 990 is moved to the odd number stage side in the shift direction. If the shaft 1 is moved rearward in the axial direction, the reverse fork FR is moved in the axial direction. Accordingly, the reverse gear is formed in the transmission 100.

As can be understood from the above description, the interlock mechanism 10a according to the present embodiment has the shaft 1, the first fork F1, the second fork F2 (third fork F3), the first inner lever e1, the second inner lever e2 (third inner lever e3), and the interlock member 4. The shaft 1 is movable along the axial direction, and is rotatable in the rotation direction. The first fork F1 and the second fork F2 (third fork F3) are disposed to face the shaft 1. The first inner lever e1 is disposed in the shaft 1. In a state where the shaft 1 is located at the first rotation position R1, the first inner lever e1 engages with the first fork F1. In a state where the shaft 1 is located at the second rotation position R2 different from the first rotation position R1, the first inner lever e1 disengages from the first fork F1. The second inner lever e2 (the third inner lever e3) is disposed in the shaft 1. In a state where the shaft 1 is located at the third rotation position R3 (fifth rotation position R5) which is the rotated position different from the first rotation position R1, the second inner lever e2 (the third inner lever e3) engages with the second fork F2 (third fork F3). In a state where the shaft 1 is located at the fourth rotation position R4 (sixth rotation position R6) different from the third rotation position R3 (fifth rotation position R5), the second inner lever e2 (the third inner lever e3) disengages from the second fork F2 (third fork F3). The interlock member 4 is disposed to be rotatable integrally with the shaft 1 in the rotation direction and to be immovable in the axial direction. In the first fork F1, the fork head F1d serving as the first engagement portion engaging with the first inner lever e1 located at the first rotation position R1 protrudes. In the second fork F2 (third fork F3), the fork head F2d (fork head F3d) serving as the second engagement portion engaging with the second inner lever e2 (third inner lever e3) located at the third rotation position R3 (fifth rotation position R5) protrudes. The interlock member 4 includes the first main body portion 41 and the second main body portion 42 which are disposed coaxially with the shaft 1 on the outer peripheral side of the shaft 1, and the connection pin 43 connecting the first main body portion 41 and the second main body portion 42 so as to be integrally rotated in the rotation direction. In the first main body portion 41, the first engagement target portion 41c is cut out which engages with the fork head F1d serving as the first engagement portion in a state where the first main body portion 41 is located at the third rotation position R3 (fifth rotation position R5). In the second main body portion 42, the second engagement target portion 42b is cut out which engages with the fork head F2d (fork head F3d) serving as the second engagement portion in a state where the second main body portion 42 is located at the first rotation position R1.

The interlock member 4 includes the first main body portion 41 having the first engagement target portion 41c formed therein, the second main body portion 42 having the second engagement target portion 42b formed therein, and the connection pin 43 connecting the first main body portion 41 and the second main body portion 42 to each other so that the first main body portion 41 and the second main body portion 42 are integrally rotated in the rotation direction of the shaft 1. The interlock member 4 configured in this way is disposed coaxially with the outer peripheral side of the shaft 1. In this simple manner, it is possible to achieve the interlock mechanism 10a which engages with and disengages from the fork head F1d of the first fork F1 and the fork head F2d of the second fork F2 (fork head F3d of the third fork F3), depending on a position in the rotation direction of the shaft 1. In this manner, the structure of the interlock mechanism 10a is simplified, and the miniaturized interlock mechanism 10a can be achieved. As a result, the miniaturized transmission 100 can be achieved. Furthermore, since the structure of the interlock mechanism is simplified, the number of components can be reduced. Therefore, the manufacturing cost of the interlock mechanism 10a and the transmission 100 can be reduced.

In addition, the interlock mechanism 10a can be easily assembled to the shaft 1 by dividing the interlock member 4 into the first main body portion 41 and the second main body portion 42. Specifically, the interlock member 4 can be assembled to the shaft 1 in a state where the first inner lever e1 formed integrally with the shift select shaft head 1a and the first main body portion 41 are assembled to each other. In addition, the second main body portion 42 can be assembled to the shaft 1 together with the second inner lever e2 (third inner lever e3). Then, the first main body portion 41 and the second main body portion 42 which are assembled to the shaft 1 are connected to each other by the connection pin 43. In this manner, the interlock member 4 can be assembled coaxially with the outer peripheral side of the shaft 1. In this way, the interlock member 4 is divided into the first main body portion 41 and the second main body portion 42. In this manner, assembly work for the interlock mechanism 10a can be facilitated (simplified). Accordingly, assembly workability for the interlock mechanism 10a can be improved. As a result, the manufacturing cost of the interlock mechanism 10a and the transmission 100 can be reduced.

In this case, the interlock member 4 includes the slit 41d formed in the first main body portion 41, and accommodating the first inner lever e1 so as to be movable in the axial direction of the shaft 1, the slit 42c (slit 42e) formed in the second main body portion 42, and accommodating the second inner lever e2 (third inner lever e3) so as to be movable in the axial direction of the shaft 1, the first plate portion 421 formed in an annular shape, allowing the insertion of the shaft 1, and to be fixed to one end side of the second main body portion 42, and the second plate portion 422 formed in an annular shape, allowing the insertion of the shaft 1, and to be fixed to the other end side of the second main body portion 42.

According to this configuration, in a state where the first inner lever e1 is accommodated in the slit 41d of the first main body portion 41, the first inner lever e1 (shift select shaft head 1a) and the first main body portion 41 can be assembled to the shaft 1. In addition, in a state where the second inner lever e2 (third inner lever e3) is accommodated in the slit 42c (slit 42e) of the second main body portion 42, the second inner lever e2 (third inner lever e3) and the second main body portion 42 can be assembled to the shaft 1. In this case, the shaft 1 can be inserted into the first plate portion 421 and the second plate portion 422. Accordingly, the second inner lever e2 (third inner lever e3) and the second main body portion 42 can be very easily assembled so as to be coaxial with the outer peripheral side of the shaft 1. Therefore, the assembly workability for the interlock mechanism 10a can be improved. As a result, the manufacturing cost of the interlock mechanism 10a and the transmission 100 can be reduced.

In addition, the second main body portion 42 has a semi-cylindrical shape, and the second main body portion 42 is not present below the axis of the communication hole 421a of the first plate portion 421 and the communication hole 422a of the second plate portion 422. Therefore, the interlock member 4 and the shaft 1 can be moved close to the second fork F2 (third fork F3), and thus, the miniaturized transmission 100 can be achieved.

### (Modification Example of Embodiment)

In the above-described embodiment, the second inner lever e2 and the third inner lever e3 are fixed to the shaft 1 by using the pin, for example. In addition, the first plate portions 421 and the second plate portion 422 are integrally connected to the second main body portion 42 forming the interlock member 4 by means of welding, for example.

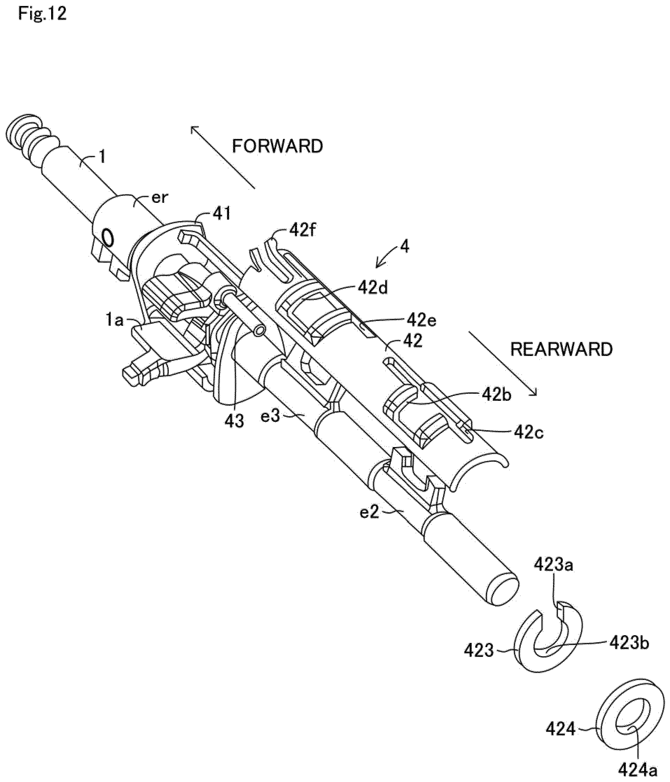

In contrast, as illustrated in Fig. 12, the second inner lever e2 and the third inner lever e3 can be formed integrally with the shaft 1. Then, after the second inner lever e2 and the third inner lever e3 are formed integrally with the shaft 1, the first plate portion 423 and the second plate portion 424 can be integrated with the second main body portion 42 by means of fitting and welding, for example. Hereinafter, a modification example will be described in detail. The same reference numerals will be given to elements the same as those in the above-described embodiment, and description thereof will be omitted.

In this modification example, as illustrated in Fig. 12, at least the second inner lever e2 and the third inner lever e3 are formed integrally with the shaft 1. In this case, the second inner lever e2 and the third inner lever e3 can be integrally formed by means of electric discharge machining or cutting, for example. Alternatively, the second inner lever e2 and the third inner lever e3 which are separately formed in the same manner as the above-described embodiment can be integrated and fixed to the shaft 1 by means of shrinkage fitting. In this modification example, the first inner lever e1 is also formed integrally with the shift select shaft head 1a. The shift select shaft head 1a is fixed to the shaft 1. In this manner, the first inner lever e1 is fixed to the shaft 1. In addition, in this modification example, the reverse inner lever er is also fixed to the shaft 1 by using the pin, for example. In this case, the reverse inner lever er can be formed integrally with the shaft 1 by means of electric discharge machining or cutting, for example. Alternatively, the reverse inner lever er can be fixed to and integrated with the shaft 1 by means of shrinkage fitting.

In this modification example, as illustrated in Fig. 12, the second main body portion 42 also has a structure the same as that according to the above-described embodiment. However, in this modification example, a pin engagement portion 42f engaging with the connection pin 43 is formed for the second main body portion 42. Then, in this modification example, the first plate portion 423 and the second plate portion 424 are fixed to the second main body portion 42 so that the second main body portion 42 is coaxial with the outer peripheral side of the shaft 1.

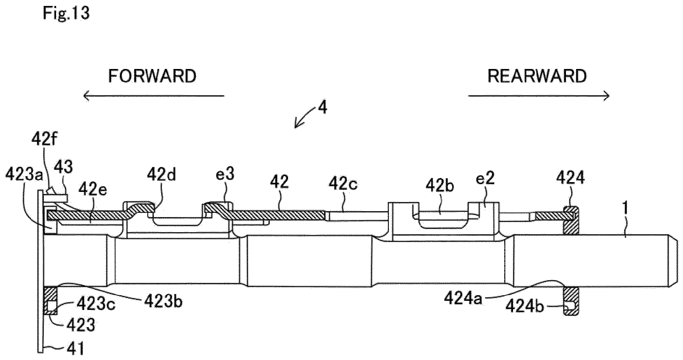

As illustrated in Fig. 12, a cutout portion 423a is formed in a portion in the circumferential direction of the annular shape of the first plate portion 423, and the first plate portion 423 is formed in a substantially C-shape. In addition, the first plate portion 423 has a communication hole 423b communicating in the forward-rearward direction. Furthermore, as illustrated in Fig. 13, the first plate portion 423 has an annular groove portion 423c to be fitted to an end portion of the second main body portion 42 having a semi-cylindrical shape.

As illustrated in Fig. 12, the second plate portion 424 is formed in a substantially annular shape, and has a communication hole 424a communicating in the forward-rearward direction. In addition, as illustrated in Fig. 13, the second plate portion 424 has an annular groove portion 424b to be fitted to an end portion of the second main body portion 42 having a semi-cylindrical shape.

In the modification example in which the second inner lever e2 and the third inner lever e3 are formed integrally with the shaft 1 in this way, the first plate portion 423 is first inserted into the shaft 1. In this case, the cutout portion 423a is formed in the first plate portion 423. Accordingly, while a forming position of the cutout portion 423a is aligned with a lever portion (projecting portion) of the second inner lever e2 and the third inner lever e3, the first plate portion 423 is inserted until the first plate portion 423 comes into contact with the first main body portion 41.

Next, the second main body portion 42 is assembled to the shaft 1 from the outside in the radial direction of the shaft 1. In this case, the second main body portion 42 is assembled to the shaft 1 so that the lever portions (projecting portions) of the second inner lever e2 and the third inner lever e3 are respectively inserted into the slit 42c and the slit 42e which are formed in the second main body portion 42. Then, as illustrated in Fig. 13, an end portion of the second main body portion 42 is fitted into the groove portion 423c formed in the first plate portion 423, thereby performing temporary assembling.

Subsequently, the second plate portion 424 is inserted into the shaft 1. Then, as illustrated in Fig. 13, an end portion of the second main body portion 42 is fitted into the groove portion 424b formed in the second plate portion 424, thereby performing the temporary assembling. In this way, the first plate portion 423, the second main body portion 42, and the second plate portion 424 which are temporarily assembled are integrated with each other in such a manner that the end portions of the second main body portion 42 which are fitted into the groove portion 423c and the groove portion 424b are welded to each other by means of resistance welding or spot welding, for example. Instead of the case where welding is performed, in the case of adopting the groove portion 423c and the groove portion 424b each having a barb disposed in advance, the end portion of the second main body portion 42, the groove portion 423c, and the groove portion 424b can be mechanically fixed to each other.

As can be understood from the above description, in the interlock mechanism 10a according to the above-described modification example, the second inner lever e2 (third inner lever e3) is formed integrally with the shaft 1. The first plate portion 423 has the cutout portion 423a allowing the insertion of the second inner lever e2 (third inner lever e3) formed integrally with the shaft 1, in a portion in the circumferential direction of the annular shape.

According to this configuration, even in a case where the second inner lever e2 (third inner lever e3) is formed integrally with the shaft 1, the cutout portion 423a is formed in the first plate portion 423. Accordingly, the first plate portion 423 can be inserted into the shaft 1. In this manner, after the first plate portion 423 is inserted, the second main body portion 42 and the second plate portion 424 can be assembled to the shaft 1. Therefore, the interlock member 4 can be very easily assembled so as to be coaxial with the outer peripheral side of the shaft 1.

Therefore, the assembly workability for the interlock mechanism 10a can be improved. As a result, the manufacturing cost of the interlock mechanism 10a and the transmission 100 can be reduced. Furthermore, the second inner lever e2 (third inner lever e3) is formed integrally with the shaft 1. In this manner, it is not necessary to provide a pin for fixing the second inner lever e2 (third inner lever e3) to the shaft 1. Accordingly, the number of components can be reduced. Therefore, the manufacturing cost of the interlock mechanism 10a and the transmission 100 can be reduced.

The present invention is not limited to the embodiment and the modification example which are described above. Various modification examples can be adopted within the scope of the present invention.

For example, in the embodiment and the modification example which are described above, the first fork F1 to the third fork F3 are disposed in the housing of the transmission 100 so as to be swingable by the support portion F1b to the support portion F3b. However, even in a case where the first fork F1 to the third fork F3 are disposed in the housing of the transmission 100 so as to be movable in the axial direction, the interlock member 4 can restrict the movement of the fork different from the selected fork. Therefore, even in this case, it is possible to expect an advantageous effect the same as that according to the embodiment and the modification example which are described above.

In addition, in the embodiment and the modification example which are described above, the fork head F1d, the fork head F2d, and the fork head F3d of the first fork F1, the second fork F2, and the third fork are configured to protrude. In addition, the first engagement target portion 41c of the first main body portion 41, and the second engagement target portion 42b and the third engagement target portion 42d of the second main body portion 42 are cut out. In this case, the fork head F1d, the fork head F2d, and the fork head F3d can be cut out and formed. The first engagement target portion 41c, the second engagement target portion 42b, and the third engagement target portion 42d can be formed to protrude. In this case, the interlock member 4 can also restrict the movement of the fork different from the selected fork. Therefore, even in this case, it is possible to expect an advantageous effect the same as that according to the embodiment and the modification example which are described above.

### Reference Signs List

1: shift select shaft, 2: shift outer lever, 3: select outer lever, 4: interlock member, 41: first main body portion, 41c: first engagement target portion, 41d: slit, 42: second main body portion, 42b: second engagement target portion, 42c: slit, 42d: third engagement target portion, 42e: slit, 421: first plate portion, 422: second plate portion, 43: connection pin, 5: reverse fork shaft, 6: reverse fork connection member, 10a: interlock mechanism, e1: first inner lever, e2: second inner lever, e3: third inner lever, F1: first fork, F1d: fork head (first engagement portion), F2: second fork, F2d: fork head (second engagement portion), F3: third fork, F3d: fork head (second engagement portion)

## Claims

1. An interlock mechanism comprising:
a shift select shaft disposed to be movable along an axial direction and rotatable in a rotation direction;
a first fork disposed to face the shift select shaft;
a second fork disposed to face the shift select shaft;
a first inner lever disposed in the shift select shaft, engaging with the first fork in a state where the shift select shaft is located at a first rotation position, and disengaging from the first fork in a state where the shift select shaft is located at a second rotation position different from the first rotation position;
a second inner lever disposed in the shift select shaft, engaging with the second fork in a state where the shift select shaft is located at a third rotation position different from the first rotation position, and disengaging from the second fork in a state where the shift select shaft is located at a fourth rotation position different from the third rotation position; and
an interlock member rotated integrally with the shift select shaft in the rotation direction, and disposed to be immovable in the axial direction,
wherein the first fork has a first engagement portion engaging with the first inner lever located at the first rotation position, and the second fork has a second engagement portion engaging with the second inner lever located at the third rotation position,
wherein the interlock member includes
a first main body portion disposed coaxially with the shift select shaft on an outer peripheral side of the shift select shaft,
a second main body portion different from the first main body portion, and
a connection pin connecting the first main body portion and the second main body portion to each other so that the first main body portion and the second main body portion are integrally rotated in the rotation direction,
wherein the first main body portion has
a first engagement target portion engaging with the first engagement portion in a state where the first main body portion is located at the third rotation position, and
wherein the second main body portion has
a second engagement target portion engaging with the second engagement portion in a state where the second main body portion is located at the first rotation position.

2. The interlock mechanism according to claim 1,
wherein the interlock member includes
a slit formed in the first main body portion, and accommodating the first inner lever so that the first inner lever is movable in the axial direction of the shift select shaft,
a slit formed in the second main body portion, and accommodating the second inner lever so that the second inner lever is movable in the axial direction of the shift select shaft,
a first plate portion formed in an annular shape, allowing insertion of the shift select shaft, and to be fixed to one end side of the second main body portion, and
a second plate portion formed in an annular shape, allowing insertion of the shift select shaft, and to be fixed to the other end side of the second main body portion.

3. The interlock mechanism according to claim 2,
wherein the second inner lever is formed integrally with the shift select shaft, and
wherein the first plate portion has
a cutout portion allowing insertion of the second inner lever formed integrally with the shift select shaft, in a portion in a circumferential direction of the annular shape.

4. The interlock mechanism according to any one of claims 1 to 3,
wherein the first engagement target portion extends in a direction orthogonal to the axial direction of the shift select shaft, and is formed by cutting out the first main body portion.

5. The interlock mechanism according to any one of claims 1 to 4,
wherein the second engagement target portion extends in a direction orthogonal to the axial direction of the shift select shaft, and is formed by cutting out the second main body portion.

6. The interlock mechanism according to claim 2,
wherein a pin engagement portion engaging with the connection pin is formed in the first plate portion.

7. The interlock mechanism according to claim 6,
wherein a recess portion accommodating a portion of the connection pin, which extends from the pin engagement portion, is disposed in the second main body portion.

8. The interlock mechanism according to claim 2,
wherein a pin engagement portion engaging with the connection pin is formed in the second main body portion.

9. The interlock mechanism according to claim 2,
wherein an annular groove portion is formed in the first plate portion so as to be fitted to an end portion of the second main body portion.

10. The interlock mechanism according to claim 2,
wherein an annular groove portion is formed in the second plate portion so as to be fitted to an end portion of the second main body portion.
